# FASCICULE DE BREVET EUROPEEN

(11) **EP 4 137 274 B1**
(45) Date de publication et mention de la délivrance du brevet: **19.06.2024**
(21) Numéro de dépôt: 22189633.5
(22) Date de dépôt: 10.08.2022
(51) Int. Cl.: B25F 5/00, A01G 3/037, B26B 15/00

(54) **SYSTÈME ET MÉTHODE DE SÉCURITÉ POUR UN OUTIL ÉLECTROPORTATIF**
SICHERHEITSSYSTEM UND -VERFAHREN FÜR EIN TRAGBARES ELEKTROWERKZEUG
SAFETY SYSTEM AND METHOD FOR A PORTABLE ELECTRIC TOOL

(30) Priorité: 19.08.2021 FR 2108766; 19.08.2021 CH 0701822021
(43) Date de publication de la demande: 22.02.2023
(73) Titulaire: Felco SA, 2206 Les Geneveys-sur-Coffrane (CH)
(72) Inventeur: Winter, Christophe, 1422 Grandson (CH)
(74) Mandataire: P&TS SA (AG, Ltd.)

(56) Documents cités:
- EP-A2- 0 362 937
- EP-A2- 2 312 195
- FR-A1- 3 074 403
- US-A1- 2013 127 262

## Description

### Domaine technique

La présente invention concerne un système de sécurité pour un outil électroportatif. La présente invention concerne également une méthode pour un tel système de sécurité.

### Etat de la technique

Dans le contexte de la présente invention, l'expression « outil électroportatif » désigne un outil électrique ou alimenté électriquement. L'outil peut être alimenté électriquement par une source d'alimentation autonome. Pendant son utilisation, il est porté par un membre de l'utilisateur, par exemple par sa main. En particulier, le même membre qui porte un tel outil permet également de le commander, par exemple à l'aide d'une gâchette. Un outil électroportatif n'a pas une position stationnaire pendant son utilisation, car l'utilisateur le déplace, par exemple pour usiner un nouvel objet ou pour mieux usiner le même objet. En d'autres termes, un outil électroportatif n'est pas stationnaire, c'est-à-dire il n'occupe pas toujours la même position. Il est donc clair à la lumière de cette définition qu'une machine telle qu'une scie stationnaire, par exemple une scie circulaire sur table ou bien une cisaille d'établi, ne rentre pas dans la définition d'outil électroportatif donnée dans ce contexte.

La source d'alimentation d'un tel outil électroportatif peut être par exemple une batterie ou bien un pack de batteries. Dans ce cas, la source est en général une pièce séparée de l'outil. En particulier l'utilisateur peut porter avec une main l'outil et simultanément porter sur lui, par exemple à l'aide d'un sac-à-dos, d'un harnais ou d'une ceinture, la source d'alimentation. Dans un autre cas, la source d'alimentation d'un tel outil électroportatif est dans l'outil électroportatif.

Un outil électroportatif comprend un actionneur, par exemple un moteur, pour transmettre une force à un objet externe sur lequel l'outil agit.

Un sécateur, des cisailles, des pinces, des presses, une tronçonneuse portative, une scie circulaire portative, une scie sauteuse portative, un rabot, une sertisseuse, une défonceuse, etc. pour des applications agricoles, viticoles, arboricoles, industrielles, artisanales, textiles, alimentaires, médicales, etc. sont des exemples non limitatifs d'outils électroportatifs selon l'invention.

Un outil électroportatif comprend un organe d'usinage et un organe de support pour cet objet. L'organe d'usinage permet d'usiner un objet et entre en contact direct avec cet objet. Il est mobile pendant l'usinage de l'objet et actionné par l'actionneur de l'outil électroportatif.

Dans le contexte de la présente invention, le mot « usiner » indique toute opération effectuée sur l'objet qui permet de le transformer, par exemple de le couper, presser, trancher, raboter etc.

L'organe de support supporte l'objet pendant son usinage et il est fixe pendant l'usinage de l'objet. L'organe de support n'est pas actionné par l'actionneur de l'outil électroportatif. Sa présence est nécessaire pour réaliser cet usinage. L'organe de support est également en contact direct avec cet objet pendant son usinage.

Dans le cas où l'outil électroportatif est un sécateur, sa lame mobile est l'organe d'usinage, car elle permet de couper un objet tel qu'une branche, et la contre-lame est l'organe de support, car elle supporte la branche pendant sa coupe.

Dans le cas où l'outil électroportatif est une scie circulaire, sa lame rotative est l'organe d'usinage, car elle permet de couper un objet tel qu'une pièce en bois, et le plateau comprenant le passage pour la lame et sur lequel l'objet s'appuie pendant la coupe est l'organe de support.

Dans le cas où l'outil électroportatif est un rabot, sa lame est l'organe d'usinage, car elle permet de couper un objet tel qu'une pièce en bois, et le plateau sur lequel l'objet s'appuie pendant la coupe est l'organe de support.

Dans le cas où l'outil électroportatif est une tronçonneuse portative, sa chaine rotative est l'organe d'usinage, car elle permet de couper un objet, et le guide chaîne de la tronçonneuse portative autour duquel la chaîne rotative se déplace est l'organe de support.

Ces types d'outils sont devenus de plus en plus efficaces et arrivent à générer une force de plusieurs kilo-Newtons. Cependant cette efficacité a augmenté de façon importante le nombre d'accidents professionnels causés par de tels outils. Le besoin de sécurité par rapport au mouvement de la lame mobile de ces outils a donc augmenté rapidement.

Différentes solutions dans l'état de la technique essaient de répondre à ce besoin.

Notamment, plusieurs systèmes de sécurité dans l'état de la technique nécessitent qu'au moins l'organe d'usinage soit réalisé au moins en partie en matériau conducteur électrique : en effet, lorsqu'une main (ou un membre, ou en général une portion du corps) de l'utilisateur touche cet organe d'usinage (et/ou éventuellement l'organe de support), et notamment sa portion en matériau conducteur électrique, ces systèmes sont arrangés pour modifier la vitesse de l'actionneur, par exemple afin de la réduire ou de l'annuler, et éventuellement déclencher une alarme (sonore et/ou visuelle). Dans la plupart des cas, un circuit électrique se ferme via la main (ou en général le corps) de l'utilisateur lorsqu'il touche cet organe d'usinage, et notamment sa portion en matériau conducteur électrique : cette fermeture est détectée de différentes façons, par exemple via une mesure d'une impédance.

Un exemple non-limitatif d'un tel système de sécurité est par exemple décrit dans le document FR3074403. Dans ce cas, le système de sécurité comprend une borne de référence, prévue pour être électriquement couplée à un sécateur électroportatif et une borne de contact, prévue pour être électriquement couplée au corps d'un utilisateur, ainsi qu'un moyen de mesure d'un signal relatif à l'impédance entre ces bornes, de sorte à détecter un contact entre le corps de l'utilisateur et le sécateur électroportatif. Pour fonctionner, ce système prévoit que la lame mobile soit réalisée dans un matériau conducteur de l'électricité. Ce document divulgue un système selon le préambule de la revendication 1.

Un autre exemple non-limitatif d'un tel système de sécurité est par exemple décrit dans le document WO2013136311, qui prévoit également que la lame mobile soit réalisée dans un matériau conducteur de l'électricité. Dans ce cas, le système de sécurité comprend un élément électriquement conducteur situé sur la poignée d'un sécateur électroportatif, de manière à être en contact avec la main qui tient le sécateur électroportatif et une ligne de circuit qui relie la lame mobile à cet élément électriquement conducteur. Un moyen de génération de puissance électrique et un moyen de détection de tension ou de courant sont disposés sur cette ligne de circuit. Des moyens de régulation sont prévus pour intervenir sur le circuit d'excitation, en réaction à une détection par le moyen de détection, lorsqu'une valeur seuil prédéterminée est dépassée, pour imposer l'arrêt du déplacement de la lame mobile. Cette valeur seuil est une valeur correspondant à une valeur détectée lorsque la lame mobile entre accidentellement en contact avec la main de l'utilisateur qui ne tient pas l'outil. Dans ce cas, le système de sécurité comprend également des moyens chaussants susceptibles d'être portés par l'utilisateur pour assurer une conductivité électrique entre au moins un des pieds de l'utilisateur et le sol.

Un autre exemple non-limitatif d'un tel système de sécurité est par exemple décrit dans le document FR3066357. Dans cette solution la lame mobile et la contre-lame d'un sécateur électroportatif sont en un matériau électriquement conducteur. Le système de sécurité comprend un premier câble de signal connecté à une unité électronique de commande et aux lames, et un deuxième câble de signal connecté à l'unité électronique de commande et une poignée en une matériau électriquement conducteur, qui est en contact avec la peau d'un utilisateur pendant l'utilisation du sécateur électroportatif. L'unité électronique de commande est configurée pour arrêter le fonctionnement de l'actionneur en cas de détection d'un flux de courant entre les lames et la poignée, transmis à travers le corps de l'utilisateur qui entre en contact avec une des lames avec sa main libre.

Tous les exemples décrits ci-dessus présentent un chemin pour le courant, fermé lorsque l'utilisateur touche la lame mobile d'un sécateur électroportatif (ou en général l'organe d'usinage d'un outil électroportatif). Ce chemin de courant comprend au moins une partie qui est référencée au potentiel d'au moins une partie conductrice de l'outil électroportatif : cela diminue la fiabilité du système de sécurité, car il implique par exemple le risque de courts-circuits indésirés.

De plus, les exemples décrits ci-dessus peuvent difficilement être installés sur des outils électroportatifs existants, sans nécessiter des modifications importantes de ces outils. En d'autres mots, le retro-fitting des systèmes connus sur des outils électroportatifs existants n'est pas simple.

Le document EP0362937 décrit un système de commande intégré dans des machines telles qu'un couteau à viande portatif pour détecter le contact d'une main humaine nue ou gantée sur une surface conductrice telle qu'une lame rotative ou un mécanisme d'alimentation rotatif afin de fournir des moyens automatisés pour une action de protection contre les blessures d'un opérateur. Le système de sécurité décrit comprend un transformateur pour modifier la tension d'alimentation d'un module de commande.

Le document EP2312195 décrit un système de détection d'alarme dans des machines en fonctionnement, telles que des machines à écorcher ou à démembrer, pour protéger la sécurité d'un opérateur. Le système peut comprendre un transformateur d'isolement qui alimente un générateur.

Le document US20130127262 décrit une machine-outil électrique comprenant une unité de détection de protection comprenant un capteur d'approche ou de contact permettant de détecter le contact d'une partie du corps d'un utilisateur avec l'outil. Le capteur d'approche ou de contact comprend un capteur de stimulation de circuit d'oscillation servant à mesurer une stimulation d'un circuit d'oscillation à haute fréquence ou d'un capteur de mouvement.

### Bref résumé de l'invention

Un but de la présente invention est de proposer un système de sécurité pour un outil électroportatif, exempt des limitations des systèmes de sécurité pour un outil électroportatif connus.

Un but de la présente invention est de proposer un système de sécurité pour un outil électroportatif, alternatif aux systèmes de sécurité pour un outil électroportatif connus.

Un but de la présente invention est de proposer un système de sécurité pour un outil électroportatif, qui soit plus fiable des systèmes de sécurité pour un outil électroportatif connus.

Un but de la présente invention est de proposer un système de sécurité pour un outil électroportatif plus simple à installer sur des outils électroportatifs existants par rapport aux systèmes de sécurité pour un outil électroportatif connus

Selon l'invention, ces buts sont atteints notamment au moyen d'un système de sécurité pour un outil électroportatif selon la revendication 1, et par une méthode pour un système de sécurité pour un outil électroportatif selon la revendication 15.

Le système de sécurité pour un outil électroportatif selon l'invention comprend l'outil électroportatif, comprenant :
- un corps,
- un organe d'usinage,
- un organe de support,
- un actionneur relié à l'organe d'usinage, afin de déplacer l'organe d'usinage par rapport à l'organe de support,
- un pad en matériau conducteur électrique, arrangé pour entourer au moins partiellement le corps et pour être saisi par un premier membre de l'utilisateur (par exemple par une de ses mains), afin de porter l'outil électroportatif et/ou actionner l'outil électroportatif.

L'organe d'usinage et/ou l'organe de support sont au moins en partie en matériau conducteur électrique.

Dans une variante préférentielle, lorsque le pad est saisi par un membre de l'utilisateur, il entre en contact direct avec l'utilisateur, afin de créer un contact galvanique entre le dispositif portable et l'utilisateur.

Dans une autre variante, lorsque le pad est saisi par un membre de l'utilisateur, il est électriquement connecté à l'utilisateur via un ou plusieurs autres éléments (au moins partiellement) électriquement conducteurs, qui sont placés entre le membre de l'utilisateur et le pad, par exemple et de façon non limitative des gants (au moins partiellement) électriquement conducteurs.

Dans une autre variante encore, lorsque le pad est saisi par un membre de l'utilisateur, il y a un couplage capacitif important entre le pad et ce membre, par exemple et de façon non limitative lorsque le membre de l'utilisateur qui saisit l'outil est une main de l'utilisateur qui porte un gant isolant. Le couplage capacitif est important car la main qui saisit l'outil électroportatif a une grande surface parallèle au pad. Ce couplage capacitif augmente encore davantage si le gant isolant est fin.

Le système de sécurité pour un outil électroportatif selon l'invention comprend aussi :
- un premier transformateur,
- un deuxième transformateur,
- une première borne électriquement connectée au pad,
- une deuxième borne électriquement connectée à l'organe d'usinage et/ou à l'organe de support,
- un module de commande de l'outil électroportatif.

Dans ce contexte, l'expression « borne électriquement connectée » au pad respectivement à un organe de l'outil, indique qu'il existe une connexion électrique entre la borne et le pad respectivement l'organe, cette connexion étant de préférence mais pas nécessairement une connexion électrique directe.

Dans le système de sécurité pour un outil électroportatif selon l'invention un circuit électrique est arrangé pour être fermé lorsqu'un élément d'impédance raccorde la première borne avec la deuxième borne, ce circuit électrique comprenant :
- un enroulement secondaire du premier transformateur,
- un enroulement primaire du deuxième transformateur,
- la première borne,
- la deuxième borne,
en sorte qu'un courant induit dans l'enroulement secondaire du premier transformateur par l'enroulement primaire du premier transformateur via un module d'excitation relié à l'enroulement primaire, circule dans ce circuit électrique.

Selon l'invention, un module de commande est arrangé pour générer une alarme et/ou pour modifier la vitesse de l'actionneur, sur la base d'un signal de mesure induit dans l'enroulement secondaire du deuxième transformateur par l'enroulement primaire du deuxième transformateur.

Dans un mode de réalisation, le module de commande est arrangé pour comparer le signal de mesure avec un signal de seuil, et selon cette comparaison, il génère une alarme et/ou il modifie la vitesse de l'actionneur, toujours sur la base d'un signal de mesure induit dans l'enroulement secondaire du deuxième transformateur par l'enroulement primaire du deuxième transformateur.

Cette solution présente notamment l'avantage par rapport à l'art antérieur d'être plus fiable. En effet, la présence des deux transformateurs garantit que le circuit électrique revendiqué n'est pas référencé à un potentiel de l'outil. En d'autres mots, le circuit électrique revendiqué dans lequel peut circuler du courant qui permet de détecter un danger est flottant, ce qui évite tout risque de courts-circuits du circuit avec l'outil électroportatif.

Notamment, le premier transformateur garantit une isolation galvanique entre le module d'excitation et le circuit électrique, et le deuxième transformateur garantit une isolation galvanique entre le circuit électrique et le module de mesure.

En plus, le système selon l'invention est simple à installer sur des outils électroportatifs existants par rapport aux systèmes de sécurité pour un outil électroportatif connus : le pad peut être inséré aisément sur le corps de l'outil, par exemple sous la forme d'un manchon en matériau conducteur électrique, arrangé pour entourer au moins partiellement le corps de l'outil. Les autres composants, c'est-à-dire le premier transformateur, le deuxième transformateur, la première borne et la deuxième borne peuvent être ajoutés aisément, par exemple sur un PCB déjà présent dans l'outil électroportatif, dans un boîtier de commande ou dans tout autre unité reliée à l'outil électroportatif. Le module de commande peut être un module de commande déjà existant dans l'outil électroportatif, dans le boîtier de commande ou dans tout autre unité reliée à l'outil électroportatif, et qu'on peut configurer pour le système de sécurité. Sinon, le module de commande peut être ajouté aisément, par exemple sur un PCB déjà présent, comme pour les autres composants du système de sécurité mentionnés ci-dessus.

Finalement, le système selon l'invention ne requiert pas que l'utilisateur porte des accessoires supplémentaires (tels que par exemple un bracelet, des bagues, une montre, un dispositif portable, etc.) ni des habits spéciaux (tels que par exemple des gants, des moyens chaussants, etc.) pour pouvoir fonctionner.

Dans une variante, l'élément d'impédance raccordant la première borne avec la deuxième borne comprend au moins une partie du corps de l'utilisateur.

Dans une variante, l'élément d'impédance comprend aussi d'autres éléments électriquement conducteurs, par exemple et de façon non limitative, un fil de palissage. Par exemple, à la fois un membre libre de l'utilisateur et l'organe d'usinage et/ou l'organe de coupe (et/ou toute autre partie électriquement conductrice de l'outil électroportatif) peuvent entrer en contact avec cet élément électriquement conducteur. Dans ce cas, l'élément d'impédance raccordant la première borne avec la deuxième borne comprend à la fois au moins une partie du corps de l'utilisateur ainsi que cet élément électriquement conducteur.

Dans une variante préférentielle, le circuit électrique est arrangé pour être fermé lorsqu'un deuxième membre de l'utilisateur entre en contact physique (directement ou via un ou plusieurs éléments électriquement conducteurs) avec l'organe d'usinage et/ou l'organe de coupe (et/ou toute autre partie électriquement conductrice de l'outil électroportatif).

Dans une variante, l'outil électroportatif comprend le premier transformateur, le deuxième transformateur, la première borne et/ou la deuxième borne.

Dans une variante, le système comprend le module de mesure, relié à au moins une borne de l'enroulement secondaire du deuxième transformateur, et arrangé pour mesurer le signal de mesure.

Dans une variante, le système comprend le module d'excitation, relié à au moins une borne de l'enroulement primaire du premier transformateur.

Le module de mesure et/ou le module d'excitation peut(peuvent) être dans l'outil ou dans une unité séparée et en communication avec l'outil. Il(s) peut(peuvent) être intégré(s) au module de commande. Il est également possible d'intégrer le module d'excitation avec le module de mesure (et éventuellement avec le module de commande).

Dans une variante, le module d'excitation est arrangé pour générer un signal alternatif ayant une fréquence de travail f, par exemple f = 125 kHz.

Dans une variante, le système comprend un premier condensateur, en parallèle et/ou en série à l'enroulement primaire du premier transformateur, de façon à former un premier système résonnant.

Dans une variante, le système comprend un deuxième condensateur en série ou en parallèle avec l'enroulement secondaire du deuxième transformateur, de façon à former un deuxième système résonnant.

Dans une variante, la fréquence de résonnance du premier et/ou du deuxième système résonnant est la fréquence de travail f, afin de bénéficier d'un effet d'amplification à la fréquence de résonnance et/ou d'un filtrage autour de la fréquence de résonnance.

Dans une variante, le pad est constitué par une seule pièce.

Dans une variante, le pad comprend une tôle électriquement conductrice (par exemple métallique), un tissu comprenant des fibres électriquement conductrices, une bande (par exemple une bande de scotch) électriquement conductrice (par exemple métallique), un matériau isolant chargé avec des particules conductrices et/ou un élément conducteur électrique déposé sur une coque en matériau isolant (par exemple en plastique).

Dans une variante, le pad est isolé galvaniquement des pièces électriquement conductrices de l'outil électroportatif.

La présente invention concerne également une méthode pour un système de sécurité pour un outil électroportatif, ledit système comprenant :
- l'outil électroportatif, comprenant :
   - un corps,
   - un organe d'usinage,
   - un organe de support,
   - un actionneur relié à l'organe d'usinage, afin de déplacer l'organe d'usinage par rapport à l'organe de support,
   - un pad en matériau conducteur électrique, arrangé pour entourer au moins partiellement le corps et pour être saisi par un premier membre de l'utilisateur, afin de porter et/ou actionner l'outil électroportatif,
- un premier transformateur,
- un deuxième transformateur,
- une première borne électriquement connectée au pad,
- une deuxième borne électriquement connectée à l'organe d'usinage et/ou à l'organe de support,
- un module de commande,
la méthode comprenant les étapes de :
- fermeture d'un circuit électrique lorsqu'un élément d'impédance raccorde la première borne avec la deuxième borne, le circuit électrique comprenant :
   - un enroulement secondaire du premier transformateur,
   - un enroulement primaire du deuxième transformateur,
   - la première borne,
   - la deuxième borne,
- circulation dans le circuit électrique fermé d'un courant induit dans l'enroulement secondaire du premier transformateur par l'enroulement primaire du premier transformateur via un module d'excitation relié à l'enroulement primaire,
- sur la base d'un signal de mesure induit dans l'enroulement secondaire du deuxième transformateur par l'enroulement primaire du deuxième transformateur, génération d'une alarme et/ou modification de la vitesse de l'actionneur par un module de commande.

### Brève description des figures

Des exemples de mise en oeuvre de l'invention sont indiqués dans la description illustrée par les figures annexées dans lesquelles :
La figure 1 illustre une vue latérale d'un mode de réalisation d'une partie du système de sécurité pour un outil électroportatif selon l'invention.
La figure 2 illustre une vue schématique d'un mode de réalisation d'une partie du système de sécurité pour un outil électroportatif selon l'invention.
La figure 3 illustre une vue d'une extrémité d'un mode de réalisation de l'outil électroportatif du système de sécurité selon l'invention.

### Exemple(s) de mode(s) de réalisation de l'invention

Dans la description suivante fournie à titre d'exemple, on fera référence, par simplicité, à un sécateur électroportatif. L'invention cependant n'est pas limitée à un tel instrument. L'invention n'est pas non plus limitée à l'agriculture, mais inclut aussi, par exemple des cisailles, des pinces, des presses, des tronçonneuses, une scie circulaire portative, une scie sauteuse portative, un rabot, une sertisseuse, une défonceuse, etc. pour des applications agricoles, viticoles, arboricoles, industrielles, artisanales, textiles, alimentaires, médicales, etc.

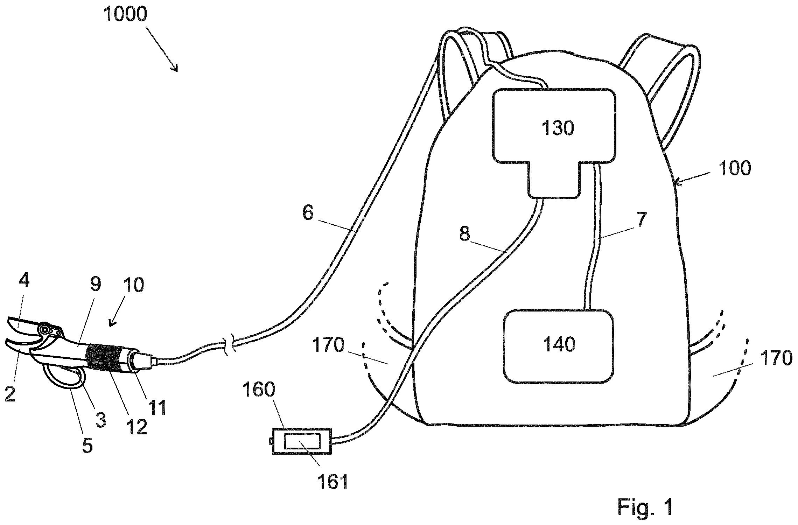

Un exemple schématique d'outil électroportatif 10 du système 1000 selon l'invention est illustré sur la figure 1. Cet outil est arrangé pour être porté par un utilisateur, par exemple par un membre de l'utilisateur tel qu'une main. Dans une variante, cette même main permet de commander l'outil 10 via une gâchette 3. Dans l'exemple de la figure 1, l'outil électroportatif 10 comprend une garde 5, un corps 9, un organe d'usinage 4 et un organe de support 2. L'organe d'usinage 4 et/ou l'organe de support 2 sont au moins en partie en matériau conducteur électrique.

L'organe d'usinage 4 permet d'usiner un objet et entre en contact direct avec cet objet. Il est mobile pendant l'usinage de l'objet et actionné par un actionneur (non illustré) de l'outil électroportatif 10, par exemple un moteur électrique.

Comme expliqué, dans le contexte de la présente invention, le mot « usiner » indique toute opération effectuée sur l'objet qui permet de le transformer, par exemple de le couper, presser, trancher, raboter etc.

L'organe de support 2 supporte l'objet pendant son usinage et il est immobile pendant l'usinage de l'objet. L'organe de support n'est pas actionné par l'actionneur de l'outil électroportatif 10. Sa présence est nécessaire pour réaliser cet usinage. L'organe de support 2 entre également en contact direct avec cet objet pendant son usinage.

Dans le cas où l'outil électroportatif 10 est un sécateur, comme dans l'exemple de la figure 1, sa lame mobile est l'organe d'usinage 4, car elle permet de couper un objet tel qu'une branche, et la contre-lame est l'organe de support 2, car elle supporte la branche pendant sa coupe.

L'outil électroportatif 10 est relié par un élément de connexion 6, un câble dans l'exemple de la figure 1, à un boîtier de commande 130 de l'outil, placé dans un moyen de soutien 100 porté par l'utilisateur, dans l'exemple un sac-à-dos. Ce boîtier de commande 130 est relié via l'élément de connexion 7 à une ou plusieurs batteries 140 dans le même moyen de soutien 100, et via l'élément de connexion 8 à un boîtier déporté 160, qui peut comprendre un affichage 161, et qui est en général placé sur une ceinture 170 portée par l'utilisateur. Dans l'exemple illustré, la ceinture 170 fait partie du sac-à-dos 100.

L'outil électroportatif 10 de la figure 1 comprend aussi un pad 12 en matériau conducteur électrique, arrangé pour entourer le corps 9 et pour être saisi par un premier membre de l'utilisateur, par exemple par une main, afin de porter et/ou actionner l'outil électroportatif 10 (par exemple via la gâchette 3).

Bien que sur la figure 1 le pad 12 entoure complétement le corps 9, cette caractéristique n'est pas nécessaire et le système selon l'invention comprend aussi un outil électroportatif 10 comprenant un pad 12 qui entoure au moins partiellement le corps 9 de l'outil électroportatif 10.

Dans une variante, le pad 12 est constitué par une seule pièce, comme par exemple illustré sur la figure 1.

Dans une variante, le pad 12 comprend une tôle électriquement conductrice (par exemple métallique), un tissu comprenant des fibres électriquement conductrices, une bande (par exemple une bande de scotch) électriquement conductrice (par exemple métallique), un matériau isolant chargé avec des particules conductrices et/ou un élément conducteur électrique déposé sur une coque en matériau isolant (par exemple en plastique).

Dans une variante, le pad 12 est un manchon séparé du corps 9 de l'outil électroportatif 10 et inséré par exemple depuis l'extrémité 11 de l'outil électroportatif 10 opposée à l'extrémité comprenant l'organe d'usinage 4 et/ou l'organe de support 2. Dans le cas où l'outil électroportatif 10 comprend une garde, le manchon est poussé ou tiré vers l'organe d'usinage 4 et/ou l'organe de support 2, jusqu'au point où il boute contre la garde 5.

Dans une variante, le pad 12 est isolé galvaniquement des pièces électriquement conductrices l'outil électroportatif 10, par exemple et de façon non limitative avec une couche de matériau isolant entre le pad 12 et les pièces électriquement conductrices de l'outil électroportatif 10. Dans une variante préférentielle, l'isolation galvanique entre le pad 12 les pièces électriquement conductrices de l'outil électroportatif 10 est réalisée par une coque (non illustrée) en matériau isolant (par exemple en plastique) qui entoure au moins partiellement le corps 7 (comprenant des parties électriquement conductrices) de l'outil électroportatif 10.

Dans une variante, un élément filaire (non illustré) en matériau électriquement conducteur relie ce pad 12 à l'extrémité 11 de l'outil électroportatif 10 opposée aux organes d'usinage et de support. Dans une variante, cet élément filaire entre dans un trou de la coque pour sortir à l'extrémité 11. Dans la variante où le pad 12 comprend un tissu comprenant des fibres électriquement conductrices, cet élément filaire est un fil de ce tissu. Dans une autre variante, il est un élément filaire séparé du pad 12 et qui est connecté au pad 12.

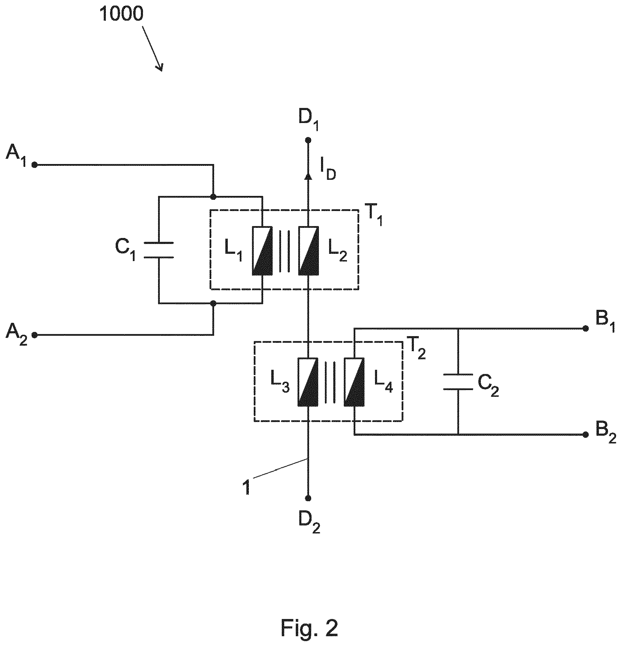

La figure 2 illustre une vue schématique d'un mode de réalisation d'une partie du système de sécurité 1000 pour un outil électroportatif selon l'invention. Dans la variante de la figure 2, le système comprend deux transformateurs T1 et T2 comprenant chacun un enroulement primaire (L1 respectivement L3) et un enroulement secondaire (L2 respectivement L4).

Un module d'excitation, non illustré sur la figure 2, est arrangé pour se connecter à au moins une borne A1 ou A2, qui sont reliées à l'enroulement primaire L1 du premier transformateur T1, afin de l'exciter.

Dans une variante préférentielle, l'enroulement primaire L1 du premier transformateur T1 est excité avec un signal AC, par exemple avec un signal sinusoïdale AC ayant une fréquence de travail f > 0. Bien entendu, d'autres signaux d'excitation AC ayant une forme pas sinusoïdale peuvent être utilisés.

Dans une variante, le module d'excitation est arrangé pour générer deux mêmes signaux AC déphasés, l'un pour la borne A1 et l'autre pour la borne A2. Si les signaux sont déphasés de 180°, l'enroulement primaire L1 du premier transformateur T1 est excité avec un signal d'excitation ayant une valeur pic-à-pic qui est le double de la même valeur qu'on aurait au cas où un seul signal était utilisé.

Dans une variante, la fréquence du(des) signal(signaux) d'excitation est f = 125kHz.

Dans la variante de la figure 2, le système comprend un premier condensateur C1, en parallèle à l'enroulement primaire L1 du premier transformateur T1, de façon à former un premier système résonnant. Dans une autre variante (non illustrée), le premier condensateur C1 est en série à l'enroulement primaire L1 du premier transformateur T1.

Lorsqu'un condensateur C1, en parallèle ou en série à l'enroulement primaire L1 du premier transformateur T1, est présent, il est possible de créer un système résonnant à l'enroulement primaire L1 du premier transformateur T1 en accordant un condensateur C1 avec L1 : de cette façon, il est possible de tirer avantage d'une amplification liée au travail sur ou proche du point de résonnance choisi idéalement à la fréquence f désirée de travail. Il est alors possible d'exciter (via le module d'excitation) le système résonnant L1-C1 avec un signal alternatif (par exemple de forme sinusoïdale ou trapézoïdale, voire quelconque) de fréquence f. La valeur de C1 est donc accordée avec celle de L1 en conséquence.

Selon l'invention, le système 1000 comprend une première borne (D1 respectivement D2) destinée à être électriquement connectée au pad 12 et une deuxième borne (D2 respectivement D1) destinée à être électriquement connectée à l'organe d'usinage 2 et/ou à l'organe de support 4 (et/ou à toute autre partie électriquement conductrice de l'outil électroportatif 10, notamment toute partie électriquement conductrice qui peut être un danger pour l'utilisateur).

Selon l'invention, le système de la figure 2 comprend un circuit électrique 1 arrangé pour être fermé lorsqu'un élément d'impédance raccorde la première borne (D1 respectivement D2) avec la deuxième borne (D2 respectivement D1). Selon l'invention, ce circuit électrique 1 comprend :
- l'enroulement secondaire L2 du premier transformateur T1,
- l'enroulement primaire L3 du deuxième transformateur T2,
- la première borne (D1 respectivement D2),
- la deuxième borne (D2 respectivement D1).

Selon l'invention, un courant ID circule dans ce circuit 1, ce courant étant induit dans l'enroulement secondaire L2 du premier transformateur T1 par l'enroulement primaire L1 du premier transformateur T1 via le module d'excitation relié à l'enroulement primaire L1.

Selon l'invention, un module de commande (non illustré) est arrangé pour générer une alarme et/ou pour modifier la vitesse de l'actionneur de l'outil électroportatif 10, sur la base d'un signal de mesure induit dans l'enroulement secondaire L4 du deuxième transformateur T2 par l'enroulement primaire L3 du deuxième transformateur T2.

Cette solution présente notamment l'avantage par rapport à l'art antérieur d'être plus fiable. En effet, la présence des deux transformateurs T1 et T2 garantit que le circuit électrique 1 revendiqué n'est pas référencé à un potentiel de l'outil électroportatif 10. En d'autres mots, dans le circuit électrique 1 revendiqué peut circuler du courant induit ID qui est flottant, ce qui évite tout risque de courts-circuits avec (les parties électriquement conductrices de) l'outil électroportatif 10. En d'autres mots, les bornes D1 et D2 sont flottantes.

Notamment, le premier transformateur T1 garantit une isolation galvanique entre le module d'excitation (arrangé pour se connecter à au moins une des bornes A1 et/ou A2) et le circuit électrique 1, et le deuxième transformateur T2 garantit une isolation galvanique entre le circuit électrique 1 et le module de mesure (arrangé pour se connecter à au moins une des bornes B1 et/ou B2).

Dans une variante, l'élément d'impédance raccordant la première borne (D1 respectivement D2) avec la deuxième borne (D2 respectivement D1) comprend au moins une partie du corps de l'utilisateur.

Dans une variante préférentielle, le circuit électrique 1 est arrangé pour être fermé lorsqu'un deuxième membre de l'utilisateur entre en contact physique (directement ou via un ou plusieurs éléments électriquement conducteurs) avec l'organe d'usinage 4 et/ou avec l'organe de support 2. Dans ce cas, les bornes D1 et D2 sont agencées de manière à raccorder d'une part le corps de l'utilisateur, et d'autre part l'organe d'usinage 4 et/ou l'organe de support 2 (et/ou à toute autre partie électriquement conductrice de l'outil électroportatif 10, notamment toute partie électriquement conductrice qui peut être un danger pour l'utilisateur).

Par souci de simplicité, on supposera ensuite que la main droite de l'utilisateur est connectée à l'une des bornes D1 ou D2 formant la connexion avec le corps de l'utilisateur et respectivement que l'autre borne (D2 ou D1) est connectée à une pièce conductrice de l'outil électroportatif 10, qui par exemple a une impédance de raccordement vers l'organe d'usinage 4 et/ou l'organe de support 2 suffisamment faible pour les considérer en contact galvanique. Dès lors pour la suite de l'explication, la main gauche de l'utilisateur devient la partie du corps qui peut entrer en contact avec l'organe d'usinage 4 et/ou l'organe de support 2 et donc à protéger contre une blessure.

La connexion électrique entre la main droite de l'utilisateur et l'une des bornes D1 ou D2 se fait par un contact avec le pad 12 en matériau conducteur électrique. Dans une variante préférentielle, ce pad 12 est en contact physique direct avec la peau de l'utilisateur ou présente un couplage capacitif important avec cette dernière. Dans une variante préférentielle, ce pad 12 est isolé galvaniquement des pièces électriquement conductrices de l'outil électroportatif 10.

Au repos, lorsque la main gauche de l'utilisateur n'est pas en contact physique avec l'organe d'usinage 4 et/ou l'organe de support 2 (ou tout autre partie électriquement conductrice de l'outil électroportatif 10), les bornes D1 et D2 sont isolées galvaniquement l'une de l'autre et l'amplitude du courant ID est donc nulle.

Lorsqu'un élément d'impédance Z (non illustré) vient raccorder D1 à D2 (par exemple et de façon non limitative, lorsqu'il y a un contact direct de la main gauche de l'utilisateur sur une partie électriquement conductrice de l'outil électroportatif 10), un courant ID circule dans le circuit électrique 1. La norme de l'impédance Z peut varier sur plusieurs ordres de grandeur en fonction des individus et de la qualité des contacts de surface. Il est possible de mesurer une impédance Z de l'ordre du méga-ohm.

Lorsqu'un courant ID circule entre D1 et D2, il induit une excitation de l'enroulement secondaire L4 du deuxième transformateur. Dès lors, une image du courant ID peut donc être mesurée par une tension et/ou un courant entre les bornes B1 et B2 par un module de mesure (non représenté).

Dans le mode de réalisation de la figure 2, un deuxième condensateur C2 est en parallèle avec l'enroulement secondaire L4 du deuxième transformateur T2, de façon à former un deuxième système résonnant. Dans une autre variante (non illustrée), le deuxième condensateur C2 est en série à l'enroulement secondaire L4 du deuxième transformateur T2.

Lorsqu'un condensateur C2, en parallèle ou en série à l'enroulement secondaire L4 du deuxième transformateur T2, est présent, il est possible de créer un système résonnant à l'enroulement secondaire L4 du deuxième transformateur T2 en accordant un condensateur C2 avec L4 et ainsi de tirer avantage d'une amplification liée au travail sur ou proche du point de résonnance choisi idéalement à la fréquence f désirée de travail. Il est ainsi possible de bénéficier également d'un effet d'amplification au point de résonnance ainsi que d'une sélectivité du signal en fréquence (filtrage) autour de la fréquence de travail f.

La tension (et/ou le courant) entre les bornes B1 et B2 est mesurée afin que le module de commande puisse générer une alarme et/ou modifier la vitesse de l'actionneur de l'outil électroportatif 10. Par exemple, le module de commande peut décider si l'outil électroportatif 10 doit entrer dans un mode d'alarme et se mettre en position de sécurité pour l'utilisateur (par exemple en écartant le plus possible l'organe d'usinage 4 de l'organe de travail 2) ou s'il peut rester en mode de fonctionnement normal.

Dans une variante, la tension (et/ou le courant) entre les bornes B1 et B2 est mesurée par seuillage, de préférence plus ou moins avancé avec une hystérèse ou une certaine persistance par exemple.

Dans une variante, le module de mesure est connecté à une seule borne (par exemple la borne B1) et l'autre borne (B2 dans l'exemple) est connecté à un potentiel de référence, par exemple la tension VCC/2, où VCC est la tension d'alimentation du module de mesure. Cela permet de centrer le signal de mesure par rapport à un ADC présent dans le module de mesure.

Dans une variante, le module d'excitation et/ou le module de mesure est(sont) une unité de traitement numérique. Le module d'excitation et/ou le module de mesure peut(peuvent) être intégrés dans le boîtier de commande de l'outil électroportatif 10 ou dans une unité séparée dédiée en communication avec dans le boîtier de commande de l'outil électroportatif 10 afin de signaler une alarme de danger et entrer dans le mode de protection de l'utilisateur le cas échéant. Dans une variante, le module d'excitation et/ou le module de mesure peut(peuvent) être intégrés au module de commande.

Dans une variante, l'élément d'impédance comprend aussi d'autres éléments électriquement conducteurs, par exemple et de façon non limitative, un fil de palissage. Par exemple, à la fois un membre libre de l'utilisateur et l'organe d'usinage 4 et/ou l'organe de coupe 2 (et/ou toute autre partie électriquement conductrice de l'outil électroportatif) peuvent entrer en contact avec cet élément électriquement conducteur. Dans ce cas, l'élément d'impédance raccordant la première borne (D1 ou D2) avec la deuxième borne (D2 ou D1) comprend à la fois au moins une partie du corps de l'utilisateur ainsi que cet élément électriquement conducteur.

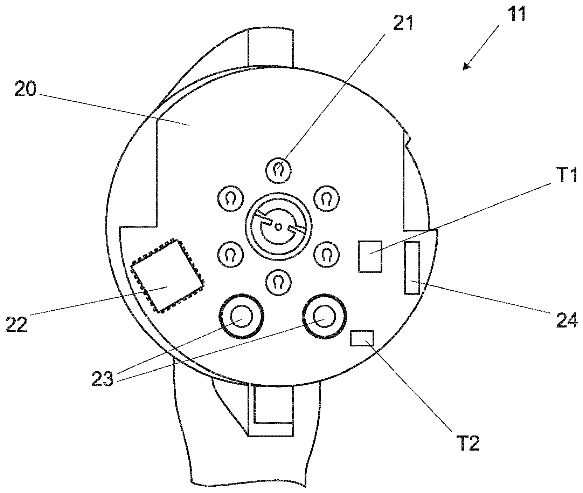

La figure 3 illustre une vue d'une extrémité 11 d'un mode de réalisation de l'outil électroportatif 10 du système de sécurité selon l'invention. Il s'agit de l'extrémité 11 de l'outil électroportatif 10 opposée à celle qui comprend l'organe d'usinage 4 et/ou l'organe de support 2.

Sur la figure 3, en correspondance de cette extrémité 11 l'outil électroportatif 10 comprend (au moins) un PCB 20.

En règle générale, en correspondance de cette extrémité 11 l'outil électroportatif 10 est relié par un élément de connexion 6, un câble dans l'exemple de la figure 1, à un boîtier de commande 130 de l'outil et/ou à une ou plusieurs batteries 140. En règle générale, en correspondance de cette extrémité 11 il y a déjà un PCB 20. Dans l'exemple de la figure 3, le PBC 20 comprend des pins 21 qui permettent la connexion mécanique et électrique avec l'élément de connexion 6 de la figure 3. Le nombre de pin 21 sur la figure 3 est six (trois pins pour les signaux d'alimentation des batteries 140 et trois pins pour les signaux communication avec le boîtier de commande 130). Cependant le nombre des pins 21 ainsi que leur arrangement n'est pas limitatif.

Dans l'exemple de la figure 3, le PCB 20 comprend le premier transformateur T1 et le deuxième transformateur T2, qui dans l'exemple sont des dispositifs de type SMD (« Surface-Mount Device »).

Dans l'exemple de la figure 3, le PCB 20 comprend un connecteur 24 pour recevoir l'élément filaire électriquement connecté au pad 12.

Dans l'exemple de la figure 3, le PCB 20 comprend au moins une vis 23 en matériau électriquement conducteur, qui est électriquement connecté à l'organe d'usinage 4 et/ou l'organe de support 2, par exemple via les parties en matériau électriquement conducteur du corps 9 de l'outil électroportatif 10. Dans une variante, cette(ces) vis 23 permet(permettent) aussi de fixer le PCB 20 au corps de l'outil électroportatif 10.

L'enroulement secondaire L2 du premier transformateur T1, l'enroulement primaire L3 du deuxième transformateur T2, la vis 23 (représentant une borne D1 ou D2) et le connecteur 24 (représentant l'autre borne D2 ou D1) sont électriquement arrangés sur le PCB 20 comme illustré sur la figure 2.

Dans l'exemple de la figure 3, le PCB 20 comprend un module de traitement numérique 22 qui intègre à la fois le module d'excitation et le module de mesure. Dans une variante, le module de traitement numérique 22 intègre aussi le module de commande.

Lorsqu'un élément d'impédance Z (non illustré) vient raccorder l'organe d'usinage 4 et/ou l'organe de support 2 (électriquement connectés à au moins une vis 23) avec la main qui saisit l'outil électroportatif 10 via le pad 12, électriquement connecté au connecteur 24 via un élément filaire, un courant d'amplitude ID circule dans le circuit électrique 1, qui comprend :
- l'enroulement secondaire du premier transformateur T1,
- l'enroulement primaire du deuxième transformateur T2,
- la vis 23,
- le connecteur 24.

Dans la variante où le pad 12 est isolé galvaniquement des pièces électriquement conductrices de l'outil électroportatif 10 (par exemple au moins une partie métallique du corps 9 de l'outil 10), il existe une capacité entre le pad et ces pièces électriquement conductrices de l'outil électroportatif 10. Cette capacité génère un signal de fond détectable par le module de commande, qui est toujours présent lorsque l'utilisateur saisit l'outil 10. Dans une variante ce signal de fond peut être utilisé par le module de commande pour comprendre que le système de sécurité est bien actif.

Dans une variante, le système de sécurité peut être activé par une séquence de déplacements prédéterminée d'une gâchette 3 de l'outil électroportatif, cette activation étant une fonction spéciale ou accessoire telle que décrite dans le document EP2659765 au nom de la demanderesse. Des exemples de séquence de déplacements prédéterminée sont également donnés dans ce document.

Dans une variante, le système de sécurité peut être aussi désactivé par une séquence de déplacements prédéterminée d'une gâchette 3 de l'outil électroportatif, cette désactivation étant une fonction spéciale ou accessoire telle que décrite dans le document EP2659765 au nom de la demanderesse. Des exemples de séquence de déplacements prédéterminée sont également donnés dans ce document.

Dans une variante, la désactivation est permise une fois seulement, par exemple pour réaliser un usinage difficile ou problématique. Dans une variante, après la désactivation l'utilisateur en est informé via un signal sonore et/ou visuel. Après l'usinage, le système de sécurité est réactivé automatiquement par le module de commande.

Au cas où l'outil électroportatif 10 est un sécateur, dans une variante au moins une portion d'une surface de la contre-lame est en matériau isolant électrique.

Grâce à cette portion de la contre-lame en matériau isolant électrique, si un corps en matériau conducteur entre en contact avec cette portion, il ne déclenche pas le système de sécurité du sécateur électroportatif. En effet, le matériau conducteur ne permet pas un passage de charge nécessaire pour ce déclanchement. Cela permet de réduire ou d'annuler des faux déclenchements du système de sécurité.

### Numéros de référence employés sur les figures

- 1: Circuit électrique
- 2: Contre-lame
- 3: Gâchette
- 4: Lame mobile
- 5: Garde
- 6: Elément de connexion
- 7: Elément de connexion
- 8: Elément de connexion
- 9: Corps
- 10: Outil électroportatif
- 11: Extrémité de l'outil électroportatif
- 12: Pad
- 20: PCB
- 21: Pin pour signal et/ou alimentation
- 22: Module de traitement numérique
- 23: Vis
- 24: Connecteur pour fil
- 100: Moyen de soutien (sac-à-dos)
- 130: Boîtier de commande
- 140: Batterie(s)
- 160: Boîtier déporté
- 161: Affichage
- 170: Ceinture
- 1000: Système
- A1: Première borne d'excitation
- A2: Deuxième borne d'excitation
- B1: Première borne de mesure
- B2: Deuxième borne de mesure
- C1: Premier condensateur
- C2: Deuxième condensateur
- D1: Première borne du circuit électrique
- D2: Deuxième borne du circuit électrique
- L1: Premier enroulement du premier transformateur
- L2: Deuxième enroulement du premier transformateur
- L3: Premier enroulement du deuxième transformateur
- L4: Deuxième enroulement du deuxième transformateur
- ID: Courant induit
- T1: Premier transformateur
- T2: Deuxième transformateur

## Revendications

1. Système de sécurité (1000) pour un outil électroportatif (10), comprenant :
- ledit outil électroportatif (10), comprenant :
- un corps (9),
- un organe d'usinage (4) et un organe de support (2), l'organe d'usinage (4) et/ou l'organe de support (2) étant au moins en partie en matériau conducteur électrique,
- un actionneur relié à l'organe d'usinage (4), afin de déplacer l'organe d'usinage (4) par rapport à l'organe de support (2),
- une première borne (D1 ; D2),
- une deuxième borne (D2 ; D1) électriquement connectée à l'organe d'usinage (4) et/ou à l'organe de support (2),
- un module de commande dudit outil électroportatif (10),
dans lequel un circuit électrique (1) est arrangé pour être fermé lorsqu'un élément d'impédance raccorde la première borne (D1 ; D2) avec la deuxième borne (D2; D1),
**caractérisé en ce que**
- ledit outil électroportatif (10) comprend :
- un pad (12) en matériau conducteur électrique, arrangé pour entourer au moins partiellement ledit corps (9) et pour être saisi par un premier membre de l'utilisateur, afin de porter et/ou actionner l'outil électroportatif (10),
**en ce que**
ledit système comprend :
- un premier transformateur (T1),
- un deuxième transformateur (T2),
**en ce que**
- ladite première borne (D1 ; D2) est électriquement connectée au pad (12),
et **en ce que** ledit circuit électrique (1) comprend :
- un enroulement secondaire (L2) dudit premier transformateur (T1),
- un enroulement primaire (L3) dudit deuxième transformateur (T2),
- ladite première borne (D1 ; D2),
- ladite deuxième borne (D2; D1),
en sorte qu'un courant induit (ID) dans l'enroulement secondaire (L2) du premier transformateur (T1) par un enroulement primaire (L1) du premier transformateur (T1) via un module d'excitation relié audit enroulement primaire (L1), circule dans ledit circuit (1),
ledit module de commande étant arrangé pour générer une alarme et/ou pour modifier la vitesse dudit actionneur, sur la base d'un signal de mesure induit dans un enroulement secondaire (L4) du deuxième transformateur (T2) par l'enroulement primaire (L3) du deuxième transformateur (T2).

2. Système de sécurité selon la revendication 1, ledit élément d'impédance raccordant la première borne (D1 ; D2) avec la deuxième borne (D2; D1) comprenant au moins une partie du corps dudit utilisateur.

3. Système de sécurité selon l'une des revendications 1 ou 2, dans lequel ledit circuit électrique (1) est arrangé pour être fermé lorsqu'un deuxième membre de l'utilisateur entre en contact physique avec l'organe d'usinage (4) et/ou l'organe de support (2).

4. Système de sécurité selon l'une des revendications 1 à 3, ledit outil électroportatif (10) comprenant ledit premier transformateur (T1), ledit deuxième transformateur (T2), ladite première borne (D1 ; D2) et/ou ladite deuxième borne (D2; D1).

5. Système de sécurité selon l'une des revendications 1 à 4, comprenant un module de mesure, relié à au moins une borne de mesure (B1, B2) de l'enroulement secondaire (L4) dudit deuxième transformateur (T2), et arrangé pour mesurer ledit signal de mesure.

6. Système de sécurité selon l'une des revendications 1 à 5, comprenant ledit module d'excitation, relié à au moins une borne d'excitation (A1, A2) de l'enroulement primaire (L1) dudit premier transformateur (T1).

7. Système de sécurité selon la revendication 6, ledit module d'excitation étant arrangé pour générer un signal alternatif ayant une fréquence de travail f, par exemple f = 125 kHz.

8. Système de sécurité selon l'une des revendications 1 à 7, comprenant un premier condensateur (C1), en parallèle et/ou en série à l'enroulement primaire (L1) dudit premier transformateur (T1), de façon à former un premier système résonnant.

9. Système de sécurité selon l'une des revendications 1 à 8, comprenant un deuxième condensateur (C2) en série ou en parallèle avec l'enroulement secondaire (L4) du deuxième transformateur (T2), de façon à former un deuxième système résonnant.

10. Système de sécurité selon l'une des revendications 8 ou 9, la fréquence de résonnance du premier et/ou du deuxième système résonnant étant la fréquence de travail f, afin de bénéficier d'un effet d'amplification à la fréquence de résonnance et/ou d'un filtrage autour de la fréquence de résonnance.

11. Système de sécurité selon l'une des revendications 1 à 10, ledit pad (12) étant arrangée pour être en contact avec un membre de l'utilisateur, afin de créer un contact galvanique entre le pad (12) et l'utilisateur.

12. Système de sécurité selon l'une des revendications 1 à 11, ledit pad (12) étant constitué par une seule pièce.

13. Système de sécurité selon l'une des revendications 1 à 12, ledit pad (12) comprenant une tôle électriquement conductrice, un tissu comprenant des fibres électriquement conductrices, une bande électriquement conductrice, un matériau isolant chargé avec des particules conductrices et/ou un élément conducteur électrique déposé sur une coque en matériau isolant.

14. Système de sécurité selon l'une des revendications 1 à 13, ledit pad (12) étant isolé galvaniquement des pièces électriquement conductrices de l'outil électroportatif (10).

15. Méthode pour un système (1000) de sécurité pour un outil électroportatif (10), ledit système comprenant :
- ledit outil électroportatif (10), comprenant :
- un corps (9),
- un organe d'usinage (4) et un organe de support (2), l'organe d'usinage (4) et/ou l'organe de support (2) étant au moins en partie en matériau conducteur électrique,
- un actionneur relié à l'organe d'usinage (4), afin de déplacer l'organe d'usinage (4) par rapport à l'organe de support (2),
- un pad (12) en matériau conducteur électrique, arrangé pour entourer au moins partiellement ledit corps (9) et pour être saisi par un premier membre de l'utilisateur, afin de porter et/ou actionner l'outil électroportatif (10),
- un premier transformateur (T1),
- un deuxième transformateur (T2),
- une première borne (D1 ; D2) électriquement connectée au pad (12),
- une deuxième borne (D2 ; D1) électriquement connectée à l'organe d'usinage (4) et/ou à l'organe de support (2),
- un module de commande,
ladite méthode comprenant les étapes de :
- fermeture d'un circuit électrique (1) lorsqu'un élément d'impédance raccorde la première borne (D1 ; D2) avec la deuxième borne (D2; D1), ledit circuit électrique (1) comprenant :
- un enroulement secondaire (L2) du premier transformateur (T1),
- un enroulement primaire (L3) du deuxième transformateur (T2),
- ladite première borne (D1 ; D2),
- ladite deuxième borne (D2; D1),
- circulation dans ledit circuit électrique (11) fermé d'un courant induit (ID) dans l'enroulement secondaire (L2) du premier transformateur (T1) par un enroulement primaire (L1) du premier transformateur (T1) via un module d'excitation relié audit enroulement primaire (L1),
- sur la base d'un signal de mesure induit dans un enroulement secondaire (L4) du deuxième transformateur (T2) par l'enroulement primaire (L3) du deuxième transformateur (T2), génération d'une alarme et/ou modification de la vitesse dudit actionneur par un module de commande.

## Patentansprüche

1. Sicherheitssystem (1000) für ein Elektrowerkzeug (10), das enthält:
- das Elektrowerkzeug (10), das enthält:
- einen Körper (9),
- ein Bearbeitungsorgan (4) und ein Trägerorgan (2), wobei das Bearbeitungsorgan (4) und/oder das Trägerorgan (2) zumindest teilweise aus elektrisch leitendem Material sind,
- einen mit dem Bearbeitungsorgan (4) verbundenen Stellantrieb, um das Bearbeitungsorgan (4) bezüglich des Trägerorgans (2) zu verschieben,
- einen ersten Anschluss (D1; D2),
- einen zweiten Anschluss (D2; D1), der elektrisch mit dem Bearbeitungsorgan (4) und/oder dem Trägerorgan (2) verbunden ist,
- ein Steuermodul des Elektrowerkzeugs (10),
wobei ein elektrischer Stromkreis (1) eingerichtet ist, um geschlossen zu sein, wenn ein Impedanzelement den ersten Anschluss (D1; D2) mit dem zweiten Anschluss (D2; D1) verbindet,
**dadurch gekennzeichnet, dass**
- das Elektrowerkzeug (10) enthält:
- ein Pad (12) aus elektrisch leitendem Material, das eingerichtet ist, um den Körper (9) zumindest teilweise zu umgeben und um von einem ersten Körperglied des Benutzers ergriffen zu werden, um das Elektrowerkzeug (10) zu tragen und/oder zu betätigen,
dass das System enthält:
- einen ersten Transformator (T1),
- einen zweiten Transformator (T2),
dass
- der erste Anschluss (D1; D2) elektrisch mit dem Pad (12) verbunden ist,
und dass der Stromkreis (1) enthält:
- eine Sekundärwicklung (L2) des ersten Transformators (T1),
- eine Primärwicklung (L3) des zweiten Transformators (T2),
- den ersten Anschluss (D1; D2),
- den zweiten Anschluss (D2; D1),
damit ein in die Sekundärwicklung (L2) des ersten Transformators (T1) durch eine Primärwicklung (L1) des ersten Transformators (T1) über ein mit der Primärwicklung (L1) verbundenes Erregermodul induzierter Strom (ID) im Stromkreis (1) fließt,
wobei das Steuermodul eingerichtet ist, um auf der Basis eines in eine Sekundärwicklung (L4) des zweiten Transformators (T2) durch die Primärwicklung (L3) des zweiten Transformators (T2) induzierten Messsignals einen Alarm zu erzeugen und/oder die Geschwindigkeit des Stellantriebs zu verändern.

2. Sicherheitssystem nach Anspruch 1, wobei das den ersten Anschluss (D1; D2) mit dem zweiten Anschluss (D2; D1) verbindende Impedanzelement mindestens einen Teil des Körpers des Benutzers enthält.

3. Sicherheitssystem nach einem der Ansprüche 1 oder 2, wobei der elektrische Stromkreis (1) eingerichtet ist, um geschlossen zu sein, wenn ein zweites Körperglied des Benutzers mit dem Bearbeitungsorgan (4) und/oder dem Trägerorgan (2) in Körperkontakt kommt.

4. Sicherheitssystem nach einem der Ansprüche 1 bis 3, wobei das Elektrowerkzeug (10) den ersten Transformator (T1), den zweiten Transformator (T2), den ersten Anschluss (D1; D2) und/oder den zweiten Anschluss (D2; D1) enthält.

5. Sicherheitssystem nach einem der Ansprüche 1 bis 4, das ein Messmodul enthält, das mit mindestens einem Messanschluss (B1, B2) der Sekundärwicklung (L4) des zweiten Transformators (T2) verbunden und eingerichtet ist, das Messsignal zu messen.

6. Sicherheitssystem nach einem der Ansprüche 1 bis 5, das das Erregermodul enthält, das mit mindestens einem Erregeranschluss (A1, A2) der Primärwicklung (L1) des ersten Transformators (T1) verbunden ist.

7. Sicherheitssystem nach Anspruch 6, wobei das Erregermodul eingerichtet ist, um ein Wechselstromsignal zu erzeugen, das eine Arbeitsfrequenz f hat, zum Beispiel f = 125 kHz.

8. Sicherheitssystem nach einem der Ansprüche 1 bis 7, das einen ersten Kondensator (C1), parallel zu und/oder in Reihe mit der Primärwicklung (L1) des ersten Transformators (T1) enthält, um ein erstes Resonanzsystem zu bilden.

9. Sicherheitssystem nach einem der Ansprüche 1 bis 8, das einen zweiten Kondensator (C2) in Reihe mit oder parallel zur Sekundärwicklung (L4) des zweiten Transformators (T2) enthält, um ein zweites Resonanzsystem zu bilden.

10. Sicherheitssystem nach einem der Ansprüche 8 oder 9, wobei die Resonanzfrequenz des ersten und/oder des zweiten Resonanzsystems die Arbeitsfrequenz f ist, um von einer Verstärkungswirkung bei der Resonanzfrequenz und/oder einer Filterung um die Resonanzfrequenz herum zu profitieren.

11. Sicherheitssystem nach einem der Ansprüche 1 bis 10, wobei das Pad (12) eingerichtet ist, um mit einem Körperglied des Benutzers in Kontakt zu sein, um einen galvanischen Kontakt zwischen dem Pad (12) und dem Benutzer zu erzeugen.

12. Sicherheitssystem nach einem der Ansprüche 1 bis 11, wobei das Pad (12) aus einem einzigen Bauteil besteht.

13. Sicherheitssystem nach einem der Ansprüche 1 bis 12, wobei das Pad (12) ein elektrisch leitendes Blech, ein elektrisch leitende Fasern enthaltendes Gewebe, ein elektrisch leitendes Band, ein mit leitenden Partikeln angereichertes Isoliermaterial und/oder ein elektrisch leitendes Element enthält, das auf eine Schale aus Isoliermaterial aufgebracht ist.

14. Sicherheitssystem nach einem der Ansprüche 1 bis 13, wobei das Pad (12) von den elektrisch leitenden Bauteilen des Elektrowerkzeugs (10) galvanisch isoliert ist.

15. Verfahren für ein Sicherheitssystem (1000) für ein Elektrowerkzeug (10), wobei das System enthält:
- das Elektrowerkzeug (10), das enthält:
- einen Körper (9),
- ein Bearbeitungsorgan (4) und ein Trägerorgan (2), wobei das Bearbeitungsorgan (4) und/oder das Trägerorgan (2) zumindest zum Teil aus elektrisch leitendem Material sind,
- einen mit dem Bearbeitungsorgan (4) verbundenen Stellantrieb, um das Bearbeitungsorgan (4) bezüglich des Trägerorgans (2) zu verschieben,
- ein Pad (12) aus elektrisch leitendem Material, das eingerichtet ist, um den Körper (9) zumindest teilweise zu umgeben und um von einem ersten Körperglied des Benutzers ergriffen zu werden, um das Elektrowerkzeug (10) zu tragen und/oder zu betätigen,
- einen ersten Transformator (T1),
- einen zweiten Transformator (T2),
- einen mit dem Pad (12) elektrisch verbundenen ersten Anschluss (D1; D2),
- einen mit dem Bearbeitungsorgan (4) und/oder mit dem Trägerorgan (2) elektrisch verbundenen zweiten Anschluss (D2; D1),
- ein Steuermodul,
wobei das Verfahren die Schritte enthält:
- Schließen eines elektrischen Stromkreises (1), wenn ein Impedanzelement den ersten Anschluss (D1; D2) mit dem zweiten Anschluss (D2; D1) verbindet, wobei der elektrische Stromkreis (1) enthält:
- eine Sekundärwicklung (L2) des ersten Transformators (T1),
- eine Primärwicklung (L3) des zweiten Transformators (T2),
- den ersten Anschluss (D1; D2),
- den zweiten Anschluss (D2; D1),
- Fließen, im geschlossenen elektrischen Stromkreis (11), eines in die Sekundärwicklung (L2) des ersten Transformators (T1) durch eine Primärwicklung (L1) des ersten Transformators (T1) über ein mit der Primärwicklung (L1) verbundenes Erregermodul induzierten Stroms (ID),
- auf der Basis eines in eine Sekundärwicklung (L4) des zweiten Transformators (T2) durch die Primärwicklung (L3) des zweiten Transformators (T2) induzierten Messsignals, Erzeugung eines Alarms und/oder Änderung der Geschwindigkeit des Stellantriebs durch ein Steuermodul.

## Claims

1. Safety system (1000) for a power tool (10), comprising:
- said electroportable tool (10), comprising:
- a body (9),
- a machining member (4) and a support member (2), the machining member (4) and/or the support member (2) being at least partly made of electrically conductive material,
- an actuator connected to the machining member (4), in order to move the machining member (4) relative to the support member (2),
- a first terminal (D1; D2),
- a second terminal (D2; D1) electrically connected to the machining member (4) and/or to the support member (2),
- a control module for said power tool (10),
wherein an electrical circuit (1) is arranged to be closed when an impedance element connects the first terminal (D1; D2) with the second terminal (D2; D1),
**characterized in that**
- said power tool (10) comprises:
- a pad (12) of electrically conductive material, arranged to at least partially surround said body (9) and to be gripped by a first limb of the user, in order to carry and/or operate the (10) power tool,
**in that**
said system comprises:
- a first transformer (T1),
- a second transformer (T2),
**in that**
- said first terminal (D1; D2) is electrically connected to the pad (12),
and **in that** said electrical circuit (1) comprises :
- a secondary winding (L2) of said first transformer (T1),
- a primary winding (L3) of said second transformer (T2),
- said first terminal (D1; D2),
- said second terminal (D2 ; D1),
so that a current (ID) induced in the secondary winding (L2) of the first transformer (T1) by a primary winding (L1) of the first transformer (T1) via an excitation module connected to said primary winding (L1), flows in said circuit (1),
said control module being arranged to generate an alarm and/or to modify the speed of said actuator, on the basis of a measurement signal induced in a secondary winding (L4) of the second transformer (T2) by the primary winding (L3) of the second transformer (T2).

2. Safety system according to claim 1, said impedance element connecting the first terminal (D1; D2) with the second terminal (D2; D1) comprising at least part of said user's body.

3. Safety system according to one of claims 1 or 2, wherein said electrical circuit (1) is arranged to be closed when a second limb of the user comes into physical contact with the machining member (4) and/or the support member (2).

4. Safety system according to one of claims 1 to 3, said power tool (10) comprising said first transformer (T1), said second transformer (T2), said first terminal (D1; D2) and/or said second terminal (D2; D1).

5. Safety system according to one of claims 1 to 4, comprising a measurement module, connected to at least one measurement terminal (B1, B2) of the secondary winding (L4) of said second transformer (T2), and arranged to measure said measurement signal.

6. Safety system according to one of claims 1 to 5, comprising said excitation module, connected to at least one excitation terminal (A1, A2) of the primary winding (L1) of said first transformer (T1).

7. Safety system according to claim 6, said excitation module being arranged to generate an alternating signal having a working frequency f, for example f = 125 kHz.

8. Safety system according to one of claims 1 to 7, comprising a first capacitor (C1), in parallel and/or in series with the primary winding (L1) of said first transformer (T1), so as to form a first resonant system.

9. Safety system according to one of claims 1 to 8, comprising a second capacitor (C2) in series or parallel with the secondary winding (L4) of the second transformer (T2), so as to form a second resonant system.

10. Safety system according to one of claims 8 or 9, the resonant frequency of the first and/or second resonant system being the working frequency f, in order to benefit from an amplification effect at the resonant frequency and/or filtering around the resonant frequency.

11. Safety system according to one of claims 1 to 10, said pad (12) being arranged to contact a limb of the user, so as to create a galvanic contact between the pad (12) and the user.

12. Safety system according to one of claims 1 to 11, said pad (12) being made of a single piece.

13. Safety system according to one of claims 1 to 12, said pad (12) comprising an electrically conductive sheet, a fabric comprising electrically conductive fibers, an electrically conductive strip, an insulating material loaded with conductive particles and/or an electrically conductive element deposited on a shell of insulating material.

14. Safety system according to one of claims 1 to 13, said pad (12) being galvanically insulated from electrically conductive parts of the power tool (10).

15. Method for a safety system (1000) for a power tool (10), said system comprising:
- said power tool (10), comprising:
- a body (9),
- a machining member (4) and a support member (2), the machining member (4) and/or the support member (2) being at least partly made of electrically conductive material,
- an actuator connected to the machining member (4), in order to move the machining member (4) relative to the support member (2),
- a pad (12) of electrically conductive material, arranged to at least partially surround said body (9) and to be gripped by a first limb of the user, in order to carry and/or operate the power tool (10),
- a first transformer (T1),
- a second transformer (T2),
- a first terminal (D1; D2) electrically connected to the pad (12),
- a second terminal (D2; D1) electrically connected to the machining member (4) and/or to the support member (2),
- a control module,
said method comprising the steps of :
- closing an electric circuit (1) when an impedance element connects the first terminal (D1; D2) with the second terminal (D2; D1), said electric circuit (1) comprising :
- a secondary winding (L2) of the first transformer (T1),
- a primary winding (L3) of the second transformer (T2),
- said first terminal (D1; D2),
- said second terminal (D2 ; D1),
- circulating in said closed electrical circuit (11) an induced current (ID) in the secondary winding (L2) of the first transformer (T1) by a primary winding (L1) of the first transformer (T1) via an excitation module connected to said primary winding (L1),
- on the basis of a measurement signal induced in a secondary winding (L4) of the second transformer (T2) by the primary winding (L3) of the second transformer (T2), generating an alarm and/or modification of the speed of said actuator by a control module.
